# EUROPÄISCHE PATENTSCHRIFT

(11) **EP 1 730 157 B1**
(45) Veröffentlichungstag und Bekanntmachung des Hinweises auf die Patenterteilung: **27.07.2011**
(21) Anmeldenummer: 05700668.6
(22) Anmeldetag: 03.01.2005
(51) Int. Cl.: C07F 5/02, H01M 10/50

(54) **IONISCHE FLÜSSIGKEITEN MIT FLUORALKYLTRIFFLUORBORAT-ANIONEN**
IONIC LIQUIDS COMPRISING FLUORALKYLTRIFFLUOROBORATE ANIONS
LIQUIDES IONIQUES COMPRENANT DES ANIONS FLUORALKYLTRIFFLUORBORATE

(30) Priorität: 02.04.2004 DE 102004017026
(43) Veröffentlichungstag der Anmeldung: 13.12.2006
(73) Patentinhaber: Merck Patent GmbH, 64293 Darmstadt (DE)
(72) Erfinder: IGNATYEV, Nikolai (Mykola), 47058 Duisburg (DE); WELZ-BIERMANN, Urs, 64646 Heppenheim (DE); BISSKY, German, 42109 Wuppertal (DE); WILLNER, Helge, 45481 Mühlheim/Ruhr (DE); KUCHERYNA, Andriy, 42117 Wuppertal (DE)
(86) Internationale Anmeldenummer: PCT/EP2005/000003
(87) Internationale Veröffentlichungsnummer: WO 2005/105815

(56) Entgegenhaltungen:
- EP-A- 0 137 389
- EP-A- 1 174 941
- EP-A- 1 229 038
- ZHI-BIN ZHOU ET AL: "New hydrophobic ionic liquids based on perfluoroalkyltrifluoroborate anions" JOURNAL OF FLUORINE CHEMISTRY, Bd. 125, 1. März 2004 (2004-03-01), Seiten 471-476, XP002327607 in der Anmeldung erwähnt
- ZHI-BIN ZHOU ET AL: "Novel electrolyte salts based on perfluoroalkyltrifluoroborate anions. 1. Synthesis and charcterization" JOURNAL OF FLUORINE CHEMISTRY, Bd. 123, 2003, Seiten 127-131, XP002327608

## Beschreibung

Die Erfindung betrifft Ionische Flüssigkeiten mit Fluoralklyltrifluorborat-Anionen nach Anspruch 2, sowie ein Verfahren zur Herstellung vor Verbindungen der Formel I nach Anspruch 1.

Ionische Flüssigkeiten oder flüssige Salze sind ionische Spezies, die aus einem organischen Kation und einem in der Regel anorganischen Anion bestehen. Sie enthalten keine neutralen Moleküle und weisen meistens Schmelzpunkte kleiner 373 K auf.

Das Gebiet der ionischen Flüssigkeiten wird zur Zeit intensiv erforscht, da die Anwendungsmöglichkeiten vielfältig sind. Übersichtsartikel zu ionischen Flüssigkeiten sind beispielsweise R. Sheldon "Catalytic reactions in ionic liquids", Chem. Commun., 2001, 2399-2407; M.J. Earle, K.R. Seddon "Ionic liquids. Green solvent for the future", Pure Appl. Chem., 72 (2000), 1391-1398; P. Wasserscheid, W. Keim "Ionische Flüssigkeiten - neue Lösungen für die Übergangsmetallkatalyse", Angew. Chem., 112 (2000), 3926-3945; T. Welton "Room temperature ionic liquids. Solvents for synthesis and catalysis", Chem. Rev., 92 (1999),2071-2083 oder R. Hagiwara, Ya. Ito "Room temperature ionic liquids of alkylimidazolium cations and fluoroanions", J. Fluorine Chem., 105 (2000), 221-227).

Die Eigenschaften ionischer Flüssigkeiten, z.B. Schmelzpunkt, thermische und elektrochemische Stabilität, Viskosität, werden stark von der Natur des Anions beeinflusst. Demgegenüber können die Polarität und die Hydrophilie bzw. Lipophilie durch die geeignete Wahl des Kation/Anion-Paares variiert werden. Es besteht insbesondere ein Bedarf an neuen ionischen Flüssigkeiten, die eine niedrige Viskosität haben.

Aufgabe der vorliegenden Erfindung war es, neue sowie thermisch und elektrochemisch als auch Hydrolyse-stabile salzartige Verbindungen mit niedriger Viskosität, die als Ionische Flüssigkeiten verwendet werden können, sowie ein Verfahren zu ihrer Herstellung zur Verfügung zu stellen.

Die Aufgabe wird durch das Verfahren nach Anspruch 1 und die erfindungsgemäßen Salze mit einem heterocyclischen Kation und Fluoralkyltrifluorborat-Anionen nach Anspruch 2 gelöst.

Aus EP 1 174 941 sind Alkalimetall- und Ammoniumsalze mit Fluoralkyltrifluorborat-Anlonen bekannt, insbesondere Lithium- oder Tetraalkylammoniumsalze, die eine hohe thermische Stabilität und eine hohe ionische Leitfähigkeit besitzen und sich so für den Einsatz als nichtwässrige Elektrolyte eignen.

Aus EP 1 229 038 ist neben den bisher beschriebenen Fluoralkyltrifluorborat-Salzen auch Tetraethylphosphonium Tnfluormethyltrifluorborat bekannt. Es wird zusätzlich beschrieben, dass auch heterocyclische Kationen als Salze mit Fluoralkylboratanionen für den Einsatz als Elektrolyten geeignet sind, ohne diese näher zu offenbaren. Die vorliegende Erfindung ist daher als Auswahlerfindung zu EP 1 229 038 zu betrachten.

Aus dem Artikel von Zhi-Bin Zhou et al, J. Fluor. Chem 2004, 125, 471-476 sind die Verbindungen 1-Methyl-3-Ethylimidazolium pentafluorethyltrifluorborat, 1-Methyl-3-Ethylimidazolium (n-heptafluorpropyl)tritluorborat und 1-Methyl-3-Ethylimidazolium (n-nonafluorbutyl)trifluorborat bekannt, die hiermit vom Schutzumfang ausgenommen werden.

Der Artikelvon Zhi-Bin Zhou et al, J. Fluor. Chem 2003, 123, 127-131 beschreibt die Synthese der Lithium- und Tetraethylammoniumsalze mit den Anionen Pentafluorethyltrifluorborat, Heptafluorpropyltrifluorborat und Nonafluorbutyltrifluorborat.

Überraschenderweise wurde gefunden, dass die Verbindungen der Formel I, wie im folgenden beschrieben zu besonders geeigneten ionischen Flüssigkeiten führen, da ihre Viskosität sehr niedrig ist.

Ein wichtiger Unterschied zum Stand der Technik ist weiterhin, dass Verbindungen mit Trifluormethyltrifluorborat-Anionen immer Verbindungen mit höher perfluoralkylierten Trifluorborat-Anionen gleichgestellt wurden. Es kann im Zuge dieser Erfindung jedoch gezeigt werden, dass Verbindungen mit Kationen gemäß Formel I und dem Trifluormethyltrifluorborat-Anion thermisch instabil sind und somit nicht den Anforderungen gerecht werden.

Gegenstand der Erfindung sind daher Verbindungen der Formel I 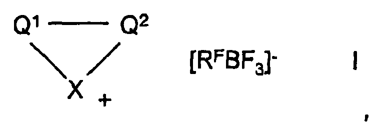 worin,
- X: N(R¹)₂,
- -Q¹-Q²-: -CHR³-CHR⁴-CHR⁵-CHR⁶,
- R¹: jeweils unabhängig voneinander Alkyl mit 1-10 C-Atomen oder -(CH₂)-R¹¹,
- R²-R⁶: Wasserstoff oder Alkyl mit 1-10 C-Atomen,

- R¹¹: perfluoriertes oder teilweise fluoriertes Alkyl mit 1-8 C- Atomen und
- R^{F}: perfluoriertes Alkyl mit 2-8 C-Atomen
bedeutet.

Die C₁-C₁₀-Alkylgruppe ist beispielsweise Methyl, Ethyl, Isopropyl, Propyl, Butyl, sek.-Butyl oder tert.-Butyl, ferner auch Pentyl, 1-, 2- oder 3-Methylbutyl, 1,1-, 1,2- oder 2,2-Dimethylpropyl, 1-Ethylpropyl, Hexyl, Heptyl, Octyl, Nonyl oder Decyl. Die Alkylgruppen können gegebenenfalls vollständig oder teilweise fluoriert sein.

Aryl bedeutet Phenyl oder fluoriertes Phenyl (C₆F₅₋ₓHₓ mit x = 0-4), welches ein- oder mehrfach durch C₁- bis C₈-Alkyl substituiert sein kann, beispielsweise Methylphenyl, (Methyl)tetrafluorphenyl, Ethylphenyl, Propylphenyl, Isopropylphenyl, tert.-Butylphenyl, Pentylphenyl, Hexylphenyl, Heptylphenyl, Octylphenyl, (Trifluormethyl)phenyl, (Trifluormethyl)tetrafluorphenyl, (Pentafluorethyl)phenyl, (Heptafluorpropyl)phenyl, (Heptafluorpropyl)tetrafluorphenyl, Dimethylphenyl, Diethylphenyl, Di(tert-butyl)phenyl, Tri(tert-butyl)phenyl, Trimethylphenyl oder Bis(trifluormethyl)phenyl.

Cycloalkyl mit 3-7C-Atomen bedeutet Cyclopropyl, Cyclobutyl, Cyclopentyl, Cyclohexyl oder Cycloheptyl, welches gegebenenfalls durch F, Cl oder Br, insbesondere F, substituiert sein kann.

Erfindungsgemäß ist eine Gruppe von Verbindungen der Formel I bevorzugt, wobei X N(R¹)₂ und -Q¹-Q²- -CHR³-CHR⁴-CHR⁵-CHR⁶ bedeutet, welche durch die Formel la 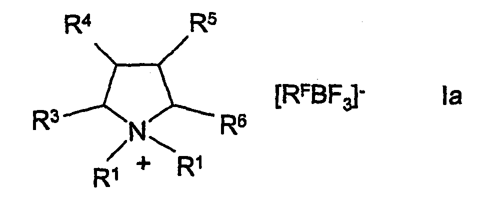 dargestellt werden können und wobei die Substituenten R^{F}, R¹ und R³ bis R⁶ eine bei Formel I angegebene Bedeutung haben.

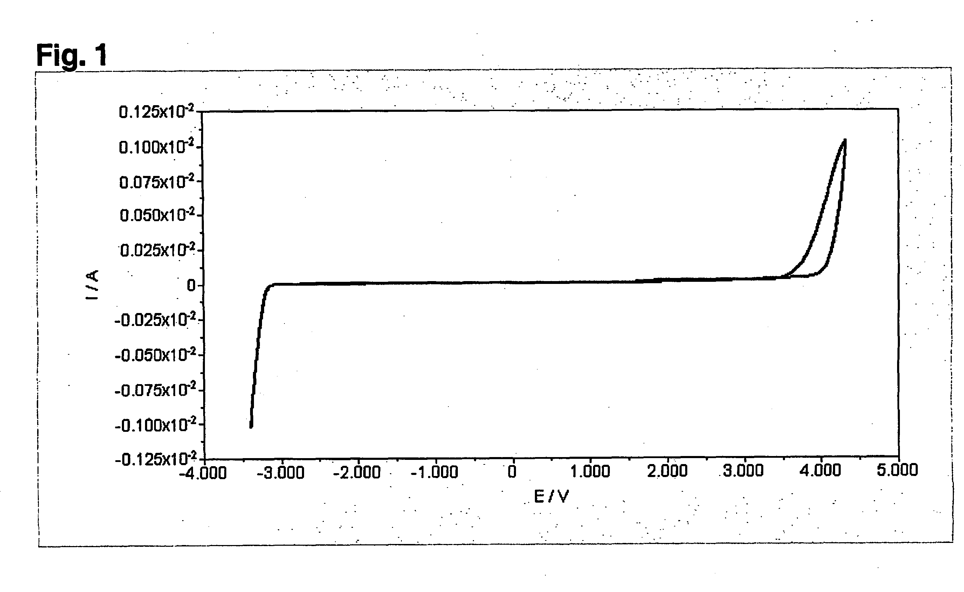

Verbindungen der Formel Ia zeichnen sich insbesondere durch ihre hohe elektrochemische Stabilität aus. Dies belegt das Cyclovoltamogramm (Figur 1) der Verbindung N-Methyl-N-butylpyrrolidiniumpentafluorethyltrifluorborat.

R^{F} in Formel la ist bevorzugt Pentafluorethyl, Heptafluorpropyl oder Nonafluorbutyl. R¹ in Formel la ist bevorzugt C₁-C₁₀-Alkyl.
Die Substituenten R³ bis R⁶ in Formel Ia sind bevorzugt Wasserstoff.

Besonders bevorzugt sind Verbindungen der Formel Ia, in denen die zwei Substituenten R¹ unterschiedlich sind.

Insbesondere sind die folgenden erfindungsgemäßen Verbindungen bevorzugt
N-Methyl-N-butylpyrroldidinium pentafluorethyltrifluorborat,
N-Methyl-N-hexylpyrroldidinium pentafluorethyltrifluorborat,
N-Methyl-N-octylpyrroldidinium pentafluorethyltrifluorborat.

Die erfindungsgemäßen Verbindungen der Formel I mit dem speziellen Merkmal der niedrigen Viskosität sind insbesondere geeignet zur Verwendung als ionische Flüssigkeit, wobei die Anwendung der ionischen Flüssigkeiten wiederum vorzugsweise als Lösungsmittel, Extraktionsmittel oder wärmeübertragendes Mittel im Vordergrund steht.

Die Verbindungen der Formel I können durch Reaktion des entsprechenden Halogenids der Verbindungen der Formel I mit einem Alkali-, Erdalkalimetall- oder Ammonium Perfluoralkyltrifluorborat, hergestellt nach dem Verfahren von Chambers et al., J. Am. Soc. 82 (1960), 5298 oder der EP 1 229 038, synthetisiert werden.

Gegenstand der Erfindung ist ebenfalls ein Verfahren zur Herstellung der Verbindungen der Formel I, im Sinn einer Eintopfsynthese,
dadurch gekennzeichnet, dass
in der ersten Stufe eine Verbindung der Formel II

(R^{F})₃P=NSi(R¹²)₃ II,

worin 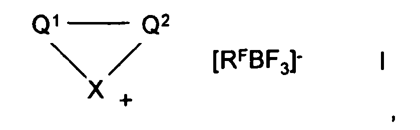 worin,
- X: NR¹ oder N(R¹)₂,
- -Q¹-Q²-: -CHR³-CHR⁴-CHR⁵-CHR⁶, -CR²=CR³-CR⁴=CR⁵-CR⁶= oder -CR⁷=CR⁸-NR¹⁰-CR⁹=,
- R¹: jeweils unabhängig voneinander Alkyl mit 1-10 C-Atomen oder -(CH₂)-R¹¹,
- R²-R⁶: Wasserstoff oder Alkyl mit 1-10 C-Atomen,
- R⁷-R⁹: Wasserstoff, Alkyl mit 1-10 C-Atomen oder Aryl,
- R¹⁰: Alkyl mit 2-10 C-Atomen oder -(CH₂)-R¹¹,
- R¹¹: perfluoriertes oder teilweise fluoriertes Alkyl mit 1-8 C- Atomen,
- R^{F}: perfluoriertes Alkyl mit 2-8 C-Atomen und
- Aryl: Phenyl, fluoriertes Phenyl oder durch Alkyl mit 1-8 C-Atomen substituiertes Phenyl oder fluoriertes Phenyl

Bedeutet,
R^{F} jeweils unabhängig voneinander perfluoriertes Alky mit 2-8 C-Atomen, bevorzugt perfluoriertes C₂-C₄-Alkyl wobei alle drei Substituenten R^{F} gleich sind, und
R¹² jeweils unabhängig voneinander Alkyl mit 1-8 C-Atomen, Alkoxy mit 1-8 C-Atomen, Cycloalkyl mit 3-7 C-Atomten, Halogen (F, Cl oder Br) oder Aryl bedeutet,
mit einem Fluorid der Formel III

MF III,

worin
M Ammonium, Alkali- oder Erdalkalimetall oder ein Metall der Gruppe 11 oder 12 ist
und einem Borsäureester der Formel IV

B(OR¹³)₃ IV,

worin
R¹³ jeweils unabhängig voneinander Alkyl mit 1-8 C-Atomen oder Aryl bedeutet,
umgesetzt werden und das resultierende Salz der Formel V

M[R^{F}B(OR¹³)₃] V,

worin M, R^{F} und R¹³ eine der zuvor genannten Bedeutungen hat,
in der zweiten Stufe mit HF umgesetzt wird
und das resultierende Salz der Formel VI,

M[R^{F}BF₃] VI,

worin R^{F} eine zuvor genannte Bedeutung hat,
in der dritten Stufe mit einer Verbindung der Formel VII 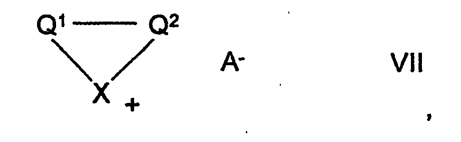 worin X und -Q¹-Q²- eine bei Formel I angegebene Bedeutung hat und A⁻ Alkylsulfat, Alkylsulfonat, Trifluormethansulfonat, Tetrafluorborat, Acetat, Trifluoracetat, Bis(perfluoralkyl)phosphinat, F⁻, HF₂⁻, Cl⁻, Br⁻ oder I⁻ bedeutet,
umgesetzt wird.

Verbindungen der Formel II

(R^{F})₃P=NSi(R¹²)₃ II,

worin
R^{F} jeweils unabhängig voneinander perfluoriertes Alky mit 2-8 C-Atomen, bevorzugt perfluoriertes C₂-C₄-Alkyl wobei alle drei Substituenten R^{F} gleich sind und
R¹² jeweils unabhängig voneinander Alkyl mit 1-8 C-Atomen, Alkoxy mit 1-8 C-Atomen, Cycloalkyl mit 3-7 C-Atomten, Halogen (F, Cl oder Br) oder Aryl bedeutet sind neu.
Bekannt sind ähnliche Verbindungen aus EP 0 250 999 und EP 0 137 389, insbesondere (Phenyl)₃P=NSi(CH₃)₃.

Die erfindungsgemäß eingesetzten N-Silyl-tris(perfluoralkyl)phosphazene (synonyme Bezeichnungen sind N-Silyl-tris(perfluoralkyl)iminophosphorane oder N-Silyl-tris(perfluoralkyl)phosphinimine) sind in Bezug auf EP 0 250 999 als Auswahl anzusehen.

Bevorzugt sind Verbindungen der Formel II, worin R^{F} ein perfluoriertes Alkyl mit 2 bis 4 C-Atomen ist. Bevorzugt sind ebenfalls Verbindungen der Formel II, worin R¹² ein Alkyl mit 1-4 C-Atomen ist.

Besonders bevorzugte Verbindungen sind Verbindungen der Formel II, worin R^{F} ein perfluoriertes Alkyl mit 2-4 C-Atomen und worin R¹² Alkyl mit 1-4 C-Atomen ist, beispielsweise (C₂F₅)₃P=NSi(CH₃)₃, (C₃F₇)₃P=NSi(CH₃)₃, (C₄F₉)₃P=NSi(CH₃)₃, (C₂F₅)₃P=NSi(C₂H₅)₃, (C₃F₇)₃P=NSi(C₂H₅)₃, (C₄F₉)₃P=NSi(C₂H₅)₃, (C₂F₅)₃P=NSi(C₃H₇)₃, (C₃F₇)₃P=NSi(C₃H₇)₃, (C₄F₉)₃P=NSi(C₃H₇)₃, (C₂F₅)₃P=NSi(C₄H₉)₃, (C₃F₇)₃P=NSi(C₄H₉)₃ oder (C₄F₉)₃P=NSi(C₄H₉)₃.
Ganz besonders bevorzugte Verbindungen sind (C₂F₅)₃P=NSi(CH₃)₃, (C₄F₉)₃P=NSi(CH₃)₃.

Zur Trifluormethylierung von organischen Verbindungen oder zur Synthese des bekannten Trifluormethyltrifluorborat-Anions eignen sich die Verbindungen (CF₃)₃P=NSi(CH₃)₃, (CF₃)₃P=NSi(C₂H₅)₃, (CF₃)₃P=NSi(C₃H₇)₃ oder (CF₃)₃P=NSi(C₄H₉)₃, insbesondere die Verbindung (CF₃)₃P=NSi(CH₃)₃.

Verbindungen der Formel II werden durch Reaktion eines Difluortris(perfluoralkyl)phosphorans (R^{F})₃PF₂ mit einem Silylamin [(R¹²)₃Si]₂NH oder einem Silylamid [(R¹²)₃Si]₂N⁻K⁺ erhalten, wobei die Substituenten R^{F} und R¹² eine zuvor angegebene Bedeutung haben und K⁺ Li⁺, Na⁺, K⁺, Rb⁺, Mg²⁺, Ca²⁺ oder Cu⁺ bedeutet (die Ladungsneutralität ist hierbei nach allgemeinem Verständnis zu beachten), wobei jedoch auch Verbindungen der Formel II durch dieses Verfahren hergestellt werden können, bei denen R^{F} zusätzlich zur zuvor genannten Bedeutung auch Trifluormethyl bedeuten kann.

Die Reaktion wird vorteilhaft lösungsmittelfrei durchgeführt, wobei Temperaturen von 10-150°C, bevorzugt 50-120°C, besonders bevorzugt von 60-90°C, geeignet sind.
Die Reaktion kann jedoch alternativ auch in Lösungsmitteln bei Temperaturen zwischen 10 und 150°C stattfinden. Geeignete Lösungsmittel sind hier Benzol, Hexan, Acetonitril, Dioxan oder Dimethoxyethan.

N-Silyl-tris(perfluoralkyl)phosphinimine sind stabile Flüssigkeiten, die zum Teil auch luftstabil sind. Perfluoralkyl bedeutet hierbei eine Perfluoralkylgruppe mit 1 bis 8 C-Atomen. Sie eignen sich hervorragend als Perfluoralkylierungsmittel. Bei Zugabe von starken Basen werden Perfluoralkylanionen freigesetzt, die mit den unterschiedlichsten Elektrophilen reagieren können, beispielsweise mit Carbonylgruppen.

N-Silyl-tris(perfluoralkyl)phosphinimine der Formel II eignen sich insbesondere erfindungsgemäß zur Erzeugung von Perfluoralkyltrifluorborat-Anionen mit 1 bis 8 C-Atomen und zur Synthese von Verbindungen der Formel I, wie zuvor beschrieben.

Zur Synthese der Verbindungen der Formel I wird in einer ersten Stufe eine Verbindung der Formel II

(R^{F})₃P=NSi(R¹²)₃ II,

wie zuvor beschrieben,
mit einem Fluorid der Formel III

MF III,

worin
M Ammonium, Alkali- oder Erdalkalimetall oder ein Metall der Gruppe 11 oder 12 ist
und einem Borsäureester der Formel IV

B(OR¹³)₃ IV,

worin
R¹³ jeweils unabhängig voneinander Alkyl mit 1-8 C-Atomen oder Aryl bedeutet,
zu dem Salz der Formel V

M[R^{F}B(OR¹³)₃] V

umgesetzt.

Geeignete Verbindungen der Formel III sind NaF, KF, RbF, CsF, MgF₂, Tetraalkylammoniumfluorid, AgF oder CdF₂. Besonders bevorzugt wird KF eingesetzt.

Geeignete Borsäureester der Formel IV sind Borsäuretrimethylester, Borsäuretriethylester, Borsäuretripropylester, Borsäure-tri(tert-butyl)ester oder Borsäuretriphenylester, insbesondere Borsäuretrimethylester.

Die Reaktion der ersten Stufe wird in einem organischen Lösungsmittel bei Temperaturen zwischen 0 und 120°C, bevorzugt zwischen 20 und 100°C, besonders bevorzugt zwischen 40 und 80°C und bevorzugt unter Schutzgasatmosphäre durchgeführt. Geeignete Lösungsmittel sind Dimethoxyethan, Tetrahydrofuran, Diglyme oder Triglyme. Besonders bevorzugt wird Dimethoxyethan verwendet.

Das entstandene Salz der Formel V

M[R^{F}B(OR¹³)₃] V,

wobei R^{F} und R¹³ eine der zuvor angegebenen Bedeutungen hat und M Ammonium, Alkali- oder Erdalkalimetall oder ein Metall der Gruppe 11 oder 12 ist,
kann ohne weitere Reinigung im Sinne einer Eintopfreaktion weiter mit HF umgesetzt werden.

Es ist hierbei ein generelles Verständnis, dass es im Rahmen der erfindugnsgemäßen Eintopfsynthese möglich ist, zunächstdas verwendete Lösungsmittel abzudestillieren und den Rückstand erneut in einem Lösungsmittel aufzunehmen. Dieser Vorgang entspricht keiner Isolierung. Beispielsweise kann das Lösungsmittel Tetrahydrofuran nicht bei der Umsetzung mit HF eingesetzt werden, da es ebenfalls mit HF reagieren würde. Ein Wechsel des Lösungsmittels ist daher für eine erfolgreiche Umsetzung zu einer Verbindung der Formel VI zwangsläufig notwendig.

Die Umsetzung mit HF erfolgt bevorzugt in dem Lösungsmittel der ersten Stufe, wobei Tetrahydrofuran ausgenommen wird, bei Temperaturen von -10 bis 60°C, bevorzugt bei 0 bis 40°C, besonders bevorzugt bei Raumtemperatur. Ohne Isolierung, eventuell nach vorherigem Abdestillieren des Lösungsmittels, wird das erhaltene Salz der Formel VI,

M[R^{F}BF₃] VI,

worin R^{F} eine zuvor genannte Bedeutung hat und
M Ammonium, Alkali- oder Erdalkalimetall oder ein Metall der Gruppe 11 oder 12 ist,
in der dritten Stufe mit einer Verbindung der Formel VII 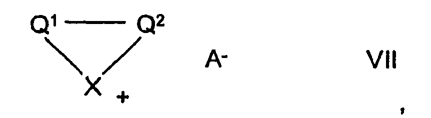 worin X und -Q¹-Q²- eine bei Formel I oder bevorzugt angegebene Bedeutung hat und A⁻ Alkylsulfat, Alkylsulfonat, Trifluormethansulfonat, Tetrafluorborat, Acetat, Trifluoracetat, Bis(perfluoralkyl)phosphinat, F⁻, HF₂⁻, Cl⁻, Br⁻ oder I⁻ bedeutet, bei Temperaturen zwischen 0 und 100°C, bevorzugt bei 10°C-50°C, besonders bevorzugt bei Raumtemperatur, umgesetzt.

Dieser dritte Reaktionsschritt kann in Wasser oder in einem Gemisch aus Wasser und einem organischen Lösungsmittel, beispielsweise Dimethoxyethan, Tetrahydrofuran, Diglyme oder Triglyme, oder in dem reinen organischen Lösungsmittel durchgeführt werden.

Aus dem dritten Reaktionsschritt erhält man zwangläufig ein Gemisch der Salze der Formel I, wie zuvor definiert, mit Salzen der Formel VIII, IX und X 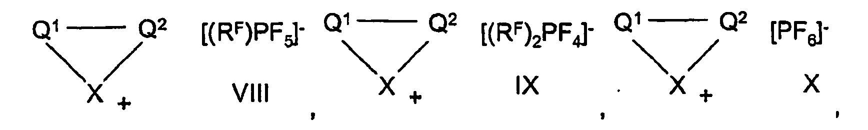 wobei X, -Q¹-Q²- und R^{F} die selbe Bedeutung haben, wie für die Salze der Formel I.

Die Verbindung der Formel II ist daher in der Lage, ein, zwei oder alle drei am P gebundene Perfluoralkylgruppen in der Umsetzung abzugeben.

Die entstehende Mischung kann 50-75 mol% Verbindungen der Formel I und 25-50 mol% Verbindungen der Formeln VIII, IX und X enthalten.
Die Mischung der Phosphat-Salze der Formeln VIII, IX und X kann aus 0-75 mol% Verbindung der Formel VIII, 0-50 mol% Verbindung der Formel IX und 0-25 mol% Verbindung der Formel X bestehen.

Die Mischung der Salze der Formel I, VIII, IX und/oder X eignet sich ebenfalls zur Verwendung als ionische Flüssigkeit. Eine Auftrennung der Salze ist nach bekannten Methoden möglich, insbesondere nach den Methoden, die in den Beispielen angegeben sind.

Die ersten beiden Stufen des erfindungsgemäßen Verfahrens sind jedoch auch so zu verstehen, dass mit Hilfe dieser Reaktionen Salze der Formel VI,

M[R^{F}BF₃] VI,

worin R^{F} eine zuvor genannte Bedeutung hat und

M Ammonium, Alkali- oder Erdalkalimetall oder ein Metall der Gruppe 11 oder 12 ist, in einem neuen Verfahren gezielt hergestellt werden können, wobei diesbezüglich der Substituent R^{F} auch Trifluormethyl umfassen kann. Nach einem solchen Verfahren können insbesondere die folgenden Verbindungen synthetisiert werden:
K[CF₃BF₃], K[C₂F₅BF₃], K[C₃F₇BF₃], K[C₄F₉BF₃], Rb[C₂F₅BF₃], Rb[C₄F₉BF₃], Ag[C₂F₅BF₃], Ag[C₄F₉BF₃] oder Cs[C₂F₅BF₃].

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

Die NMR-Spektren wurden an Lösungen in deuterierten Lösungsmitteln bei 20°C an einem Bruker Avance 250 Spektrometer gemessen. Die Meßfrequenzen der verschiedenen Kerne sind: ¹H: 250,13 MHz, ¹⁹F: 235,357 MHz und ³¹P: 101.254 MHz. Die Methode der Referenzierung wird bei jedem Spektrum bzw. bei jedem Datensatz separat angegeben.

Beispiel 1: Synthese der Ausgangsstoffe A) Synthese von N-Trimethylsilyl tris(pentafluorethyl)phosphazen 2(C₂F₅)₃PF₂ + 3[(CH₃)₃Si]₂NH → 2(C₂F₅)₃P=NSi(CH₃)₂ + 4(CH₃)₃SiF↑ + NH₃↑ 210,4 g (0,49 mol) Tris(pentafluorethyl)difluorphosphoran werden mit 123,0 g (0,76 mol) Bis(trimethylsilyl)amin in einer entsprechenden Apparatur gemischt und für 3 Stunden bei Temperaturen des Ölbads von 80°-90°C gerührt. Das entstehende N-Trimethylsilyl tris(pentafluorethyl)phosphazen kann ohne weitere Reinigung weiter umgesetzt werden. Zur Charakterisierung der Verbindung wird bei Atmosphärendruck abdestilliert. Man erhält 204,2 g N-Trimethylsilyl tris(pentafluorethyl)phosphazen mit einem Siedepunkt von 143-145°C, das entspricht einer Ausbeute von 87%.

¹⁹F NMR, ppm (CDCl₃, interne Referenz: CCl₃F): -79,08 m (CF₃), -118,59 dm (CF₂), ²J_{P,F} = 85 Hz.
¹H NMR, ppm (CDCl₃, Referenz TMS): 0,07 br.s (CH₃).
³¹P NMR, ppm (CDCl₃, Referenz: 85% H₃PO₄): -41,07 hep, ²J_{P,F} = 85 Hz.

### B) N-Trimethylsilyl tris(nonafluorbutyl)phosphazen

2(C₄F₉)₃PF₂ + 3[(CH₃)₃Si]₂NH → 2(C₄F₉)₃P=NSi(CH₃)₂ + 4(CH₃)₃SiF↑ + NH₃↑

Analog zu Beispiel 1A) werden 72,0 g (99,2 mmol)
Tris(nonafluorbutyl)difluorphosphoran mit 24,9 g (154,3 mmol) Bis(trimethylsilyl)amin umgesetzt. Man erhält 64,0 g N-Trimethylsilyl tris(nonafluorbutyl)phosphazen, das entspricht einer Ausbeute von 83,2 %. Sdp.: 108-110°C bei 2,27 kPa.
¹⁹F NMR, ppm (ohne Lösungsmittel, Acetonitril-D₃-film, interne Referenz: CCl₃F): -82,38 t (CF₃), -113,72 dm (CF₂), -118,92 m (CF₂), -126,93 m (CF₂), ⁴J_{F,F} = 9,1 Hz, ²J_{P,F} = 87 Hz.
¹H NMR, ppm (ohne Lösungsmittel, Acetonitril-D₃-film, externe Referenz: TMS): -0,70 br.s (CH₃).
³¹P NMR, ppm (ohne Lösungsmittel, Acetonitril-D₃-film, Referenz: 85% H₃PO₄): -42,09 hep, ²J_{P,F} = 87 Hz.

### Beispiel 2:

### Synthese von 1-Methyl-3-butylimidazolium pentafluorethyltrifluorborat

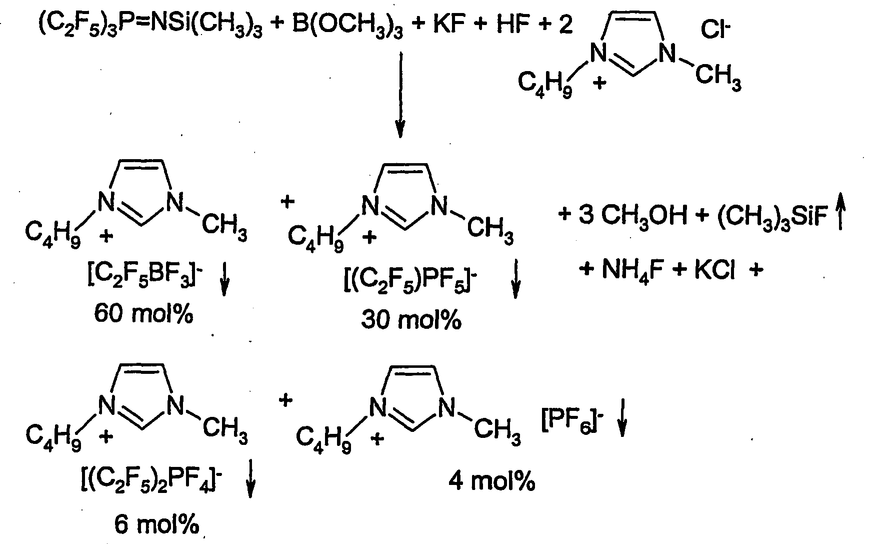

3,32 g (57,1 mmol) sprühgetrocknetes KF und 10,4 g (100 mmol) Borsäuretrimethylester werden in 100 ml trockenem 1,2-Dimethoxyethan gelöst. Zu dieser Lösung werden unter Schutzgas 30,0 g (63,1 mmol) N-Trimethylsilyltris(pentafluorethyl)phosphazen, (C₂F₅)₃P=NSi(CH₃)₃, tropfenweise bei Raumtemperatur zugegeben. Die Reaktionsmischung wird unter Rühren auf 60°C erhitzt und eine Stunde bei dieser Temperatur geführt, bis sich das KF komplett gelöst hat. Das Lösungsmittel wird abdestilliert und der ölige Rückstand in 100 ml 1,2-Dimethoxyethan aufgenommen. Zu dieser Lösung werden 20,0 g (1 mol) HF unter Kühlung der Reaktionsmischung mit einem Eisbad zugegeben. Nach 3 Stunden Rühren bei Raumtemperatur wird die überschüssige Säure HF abdestilliert und der Rückstand in 200 ml Wasser aufgenommen. Zu dieser Lösung werden 25,2 g (144,27 mmol) 1-Methyl-3-butylimidazoliumchlorid in 50 ml Wasser zugegeben. Die untere Phase, die die Mischung der neuen Imidazoliumsalze enthält, wird abgetrennt.
Nach Trocknen bei 7 Pa und 50°C erhält man eine Mischung der Salze 1-Methyl-3-butylimidazolium pentafluorethyltrifluorborat (ca. 60 mol%), 1-Methyl-3-butylimidazolium (pentafluorethyl)pentafluorphosphat (ca. 30 mol%), 1-Methyl-3-butylimidazolium bis(pentafluorethyl)tetrafluorphosphat (ca. 6 mol%) und 1-Methyl-3-butylimidazolium hexafluorphosphat (ca. 4 mol%).
Wäscht man hingegen die untere Phase mehrmals mit 100 ml Wasser, so wird das (Pentafluorethyl)pentafluorphosphat und die anderen Phosphate vom Pentaethyltrifluorborat abgetrennt. Das Borat wird darauf bei 7 Pa und 50°C getrocknet.

Man erhält 13,7 g 1-Methyl-3-butylimidazolium pentafluorethyltrifluorborat als Flüssigket, das entspricht einer Ausbeute von 70,2 %, bezogen auf KF.

¹¹B NMR: ppm (Acetonitril-D₃; externe Referenz: BF₃ · OEt₂): -0.60 qt; J¹_{B,F} = 40.9 Hz; J²_{B,F} = 20.3 Hz.
¹⁹F NMR: ppm (Acetonitril-D₃; interne Referenz: CCl₃F): -83.20 q (CF₃); -135.98 q (CF₂); -152.84 q,q (BF₃); ¹J_{B,F} = 41 Hz; ²J_{B,F} = 19.6 Hz; ⁴J_{F,F} = 5.0 Hz.
¹H NMR: ppm (Acetonitril-D₃; Referenz: TMS): 0.95 t (CH₃); 1.34 m (CH₂); 1.82 t,t (CH₂); 3.83 s (CH₃); 4.13 t (CH₂); 7.33 d,d (CH); 7.36 d,d (CH); 8.39 br.s (CH); ³J_{H,H} = 7.3 Hz; ³J_{H,H} = 6.8 Hz; J_{H,H} = 1.8 Hz.

Die Phosphate können nach bekannten Methoden aus der wässrigen Phase isoliert werden.
1-Methyl-3-butylimidazolium (pentafluorethyl)pentafluorphosphat ¹⁹F NMR (CD₃CN: interne Referenz CCl₃F): -70.14 d,d,m (PF₄); -73.50 d,quin (PF); -82.46 quin,m (CF₃); -118.79 d,quin (CF₂); ¹J_{P,F} = 827 Hz; ¹J_{P,F} = 720 Hz; ²J_{P,F} = 91 Hz; ²J_{F,F} = 47 Hz; ³J_{F,F} = 9.2 Hz; ⁴J_{F},_{F} = 7.6 Hz.

1-Methyl-3-butylimidazolium bis(pentafluorethyl)tetrafluorphosphat ¹⁹F NMR (CD₃CN, interne Referenz: CCl₃F): -71.59 d,m (PF₄); -82.27 quin,d,t (2CF₃); -118.99 d,quin,q (2CF₂); ¹J_{P,F} = 916 Hz; ²J_{P,F} = 100 Hz; ³J_{P,F} = 2.4 Hz; ³J_{F,F} = 9.2 Hz; ³J_{F,F} = 1.1 Hz; ⁴J_{F,F} = 7.4 Hz.

1-Methyl-3-butylimidazolium hexafluorphosphat
¹⁹F NMR (CD₃CN, interne Referenz: CCl₃F): -71.53 d (PF₄); ¹J_{P,F} = 707 Hz.

Analog zu diesem Beispiel werden folgende Gemische und auch isolierte Verbindungen hergestellt
A) 1,2-Dimethyl-3-butylimidazolium pentafluorethyltrifluorborat isoliert oder im Gemisch mit 1,2-Dimethyl-3-butylimidazolium (pentafluorethyl)pentafluorphosphat und/oder 1,2-Dimethyl-3-butylimidazolium bis(pentafluorethyl)tetrafluorphosphat und/oder 1,2-Dimethyl-3-butylimidazolium hexafluorphosphat;
B) 1-Methyl-3-ethylylimidazolium pentafluorethyltrifluorborat isoliert oder im Gemisch mit 1-Methyl-3-ethylimidazolium (pentafluorethyl)pentafluorphosphat und/oder 1-Methyl-3-ethylimidazolium bis(pentafluorethyl)tetrafluorphosphat und/oder 1-Methyl-3-ethylimidazolium hexafluorphosphat;
C) 1-Methyl-3-i-propylimidazolium pentafluorethyltrifluorborat isoliert oder im Gemisch mit 1-Methyl-3-1-propylimidazolium (pentafluorethyl)pentafluorphosphat und/oder 1-Methyl-3-i-propylimidazolium bis(pentafluorethyl)tetrafluorphosphat und/oder 1-Methyl-3-i-propylimidazolium hexafluorphosphat;
D) 1-Methyl-3-n-propylimidazolium pentafluorethyltrifluorborat isoliert oder im Gemisch mit 1-Methyl-3-n-propylimidazolium (pentafluorethyl)pentafluorphosphat und/oder 1-Methyl-3-n-propylimidazolium bis(pentafluorethyl)tetrafluorphosphat und/oder 1-Methyl-3-n-propylimidazolium hexafluorphosphat;
E) 1-Methyl-3-pentylimidazolium pentafluorethyltrifluorborat isoliert oder im Gemisch mit 1-Methyl-3-pentylimidazolium (pentafluorethyl)pentafluorphosphat und/oder 1-Methyl-3-pentylimidazolium bis(pentafluorethyl)tetrafluorphosphat und/oder 1-Methyl-3-pentylimidazolium hexafluorphosphat;
F) 1-Methyl-3-hexylimidazolium pentafluorethyltrifluorborat isoliert oder im Gemisch mit 1-Methyl-3-hexylimidazolium (pentafluorethyl)pentafluorphosphat und/oder 1-Methyl-3-hexylimidazolium bis(pentafluorethyl)tetrafluorphosphat und/oder 1-Methyl-3-hexylimidazolium hexafluorphosphat;
G) 1-Methyl-3-heptylimidazolium pentafluorethyltrifluorborat isoliert oder im Gemisch mit 1-Methyl-3-heptylimidazolium (pentafluorethyl)pentafluorphosphat und/oder 1-Methyl-3-heptylimidazolium bis(pentafluorethyl)tetrafluorphosphat und/oder 1-Methyl-3-heptylimidazolium hexafluorphosphat;
H) 1-Methyl-3-octylimidazolium pentafluorethyltrifluorborat isoliert oder im Gemische mit 1-Methyl-3-octylimidazolium (pentafluorethyl)pentafluorphosphat und/oder 1-Methyl-3-octylimidazolium bis(pentafluorethyl)tetrafluorphosphat und/oder 1-Methyl-3-octylimidazolium hexafluorphosphat;
I) 1-Methyl-3-nonylimidazolium pentafluorethyltrifluorborat isoliert oder im Gemisch mit 1-Methyl-3-nonylimidazolium (pentafluorethyl)pentafluorphosphat und/oder 1-Methyl-3-nonylimidazolium bis(pentafluorethyl)tetrafluorphosphat und/oder 1-Methyl-3-nonylimidazolium hexafluorphosphat;
J) 1-Methyl-3-decylimidazolium pentafluorethyltrifluorborat isoliert oder im Gemisch mit 1-Methyl-3-decylimidazolium (pentafluorethyl)pentafluorphosphat und/oder 1-Methyl-3-decylimidazolium bis(pentafluorethyl)tetrafluorphosphat und/oder 1-Methyl-3-decylimidazolium hexafluorphosphat;
K) 1,2-Dimethyl-3-ethylylimidazolium pentafluorethyltrifluorborat isoliert oder im Gemisch mit 1,2-Dimethyl-3-ethylimidazolium (pentafluorethyl)pentafluorphosphat und/oder 1,2-Dimethyl-3-ethylimidazolium bis(pentafluorethyl)tetrafluorphosphat und/oder 1,2-Dimethyl-3-ethylimidazolium hexafluorphosphat;
L) 1,2-Dimethyl-3-i-propylimidazolium pentafluorethyltrifluorborat isoliert oder im Gemisch mit 1,2-Dimethyl-3-i-propylimidazolium (pentafluorethyl)pentafluorphosphat und/oder 1,2-Dimethyl-3-1-propylimidazolium bis(pentafluorethyl)tetrafluorphosphat und/oder 1,2-Dimethyl-3-i-propylimidazolium hexafluorphosphat;
M)1,2-Dimethyl-3-n-propylimidazolium pentafluorethyltrifluorborat isoliert oder im Gemisch mit 1,2-Dimethyl-3-n-propylimidazolium (pentafluorethyl)pentafluorphosphat und/oder 1,2-Dimethyl-3-n-propylimidazolium bis(pentafluorethyl)tetrafluorphosphat und/oder 1,2-Dimethyl-3-n-propylimidazolium hexafluorphosphat;
N) 1,2-Dimethyl-3-peniylimidazolium pentafluorethyltrifluorborat isoliert oder im Gemisch mit 1,2-Dimethyl-3-pentylimidazolium (pentafluorethyl)pentafluorphosphat und/oder 1,2-Dimethyl-3-pentylimidazolium bis(pentafluorethyl)tetrafluorphosphat und/oder 1,2-Dimethyl-3-pentylimidazolium hexafluorphosphat;
O) 1 ,2-Dimethyl-3-hexylimidazolium pentafluorethyltrifluorborat isoliert oder im Gemisch mit 1,2-Dimethyl-3-hexylimidazolium (pentafluorethyl)pentafluorphosphat und/oder 1,2-Dimethyl-3-hexylimidazolium bis(pentafluorethyl)tetrafluorphosphat und/oder 1,2-Dimethyl-3-hexylimidazolium hexafluorphosphat;
P) 1,2-Dimethyl-3-heptylimidazolium pentafluorethyltrifluorborat isoliert oder im Gemisch mit 1,2-Dimethyl-3-heptylimidazolium (pentafluorethyl)pentafluorphosphat und/oder 1,2-Dimethyl-3-heptylimidazolium bis(pentafluorethyl)tetrafluorphosphat und/oder 1,2-Dimethyl-3-heptylimidazolium hexafluorphosphat;
Q)1,2-Dimethyl-3-octylimidazolium pentafluorethyltrifluorborat isoliert oder im Gemisch mit 1,2-Dimethyl-3-octylimidazolium (pentafluorethyl)pentafluorphosphat und/oder 1,2-Dimethyl-3-octylimidazolium bis(pentafluorethyl)tetrafluorphosphat und/oder 1,2-Dimethyl-3-octylimidazolium hexafluorphosphat;
R)1,2-Dimethyl-3-nonylimidazolium pentafluorethyltrifluorborat isoliert oder im Gemisch mit 1,2-Dimethyl-3-nonylimidazolium (pentafluorethyl)pentafluorphosphat und/oder 1,2-Dimethyl-3-nonylimidazolium bis(pentafluorethyl)tetrafluorphosphat und/oder 1,2-Dimethyl-3-nonylimidazolium hexafluorphosphat;
S) 1,2-Dimethyl-3-decylimidazolium pentafluorethyltrifluorborat isoliert oder im Gemisch mit 1,2-Dimethyl-3-decylimidazolium (pentafluorethyl)pentafluorphosphat und/oder 1,2-Dimethyl-3-decylimidazolium bis(pentafluorethyl)tetrafluorphosphat und/oder 1,2-Dimethyl-3-decylimidazolium hexafluorphosphat;
T) 1-Ethyl-3-butylimidazolium pentafluorethyltrifluorborat isoliert oder im Gemisch mit 1-Ethyl-3-butylimidazolium (pentafluorethyl)pentafluorphosphat und/oder 1-Ethyl-3-butylimidazolium bis(pentafluorethyl)tetrafluorphosphat und/oder 1-Ethyl-3-butylimidazolium hexafluorphosphat.

Beispiel 3:

### Synthese von N-Methyl-N-butylpyrrolidinium pentafluorethyltrifluorborat

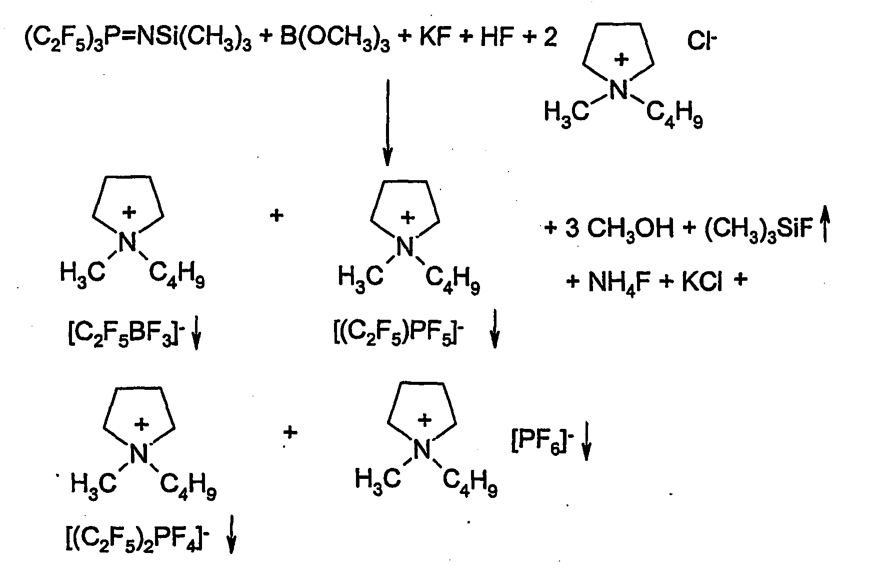

Analog zu Beispiel 2 werden 1,67 g (28,7 mmol) sprühgetrocknetes KF, 6,24 g (60,1 mmol) Borsäuremethylester, 15,0 g (31,6 mmol) N-Trimethylsilyltris(pentafluorethyl)phosphazen, 15 g (0,75 mol) HF und 11,5 g (64,7 mmol) N-MethylN-butylpyrroldiniumchlorid umgesetzt.

Die untere Phase wird analog zu Beispiel 2 von der wässrigen Phase separiert und mit kleinen Portionen Wasser gewaschen. Sie besteht aus der Mischung der Salze N-Methyl-N-butylpyrrolidinium pentafluorethyltrifluorborat und N-Methyl-N-butylpyrrolidinium (pentafluorethyl)pentafluorphosphat und/oder N-Methyl-N-butylpyrrolidinium bis(pentafluorethyl)tetrafluorphosphat und/oder N-Methyl-N-butylpyrrolidinium hexafluorphosphat. Diese feste untere Phase wird in 40 ml Ethanol aufgenommen und es werden 100 ml Wasser zugegeben, wonach N-Methyl-N-butylpyrrolidinium pentafluorethyltrifluorborat ausfällt. Diese Umkristallisation wird noch drei Mal zur weiteren Reinigung von den Phosphaten durchgeführt und der Feststoff danach im Vakuum bei 7 Pa und 50°C getrocknet.
Man erhält 6,9 g N-Methyl-N-butylpyrrolidinium pentafluorethyltrifluorborat, das entspricht einer Ausbeute von 73,1 %, bezogen auf KF.
Smp.: 79-81°C.

¹¹B NMR: ppm (Acetonitril-D₃; externe Referenz: BF₃ · OEt₂): -0.47 tq; J¹_{B,F} = 40.9 Hz; J²_{B,F} = 20.7 Hz.
¹⁹F NMR: ppm (Acetonitril-D₃; Interne Referenz: CCl₃F): -83.20 q (CF₃); -136.00 q (CF₂); -152.90 q,q (BF₃); ¹J_{B,F} = 41 Hz; ²J_{B,F} = 19.6 Hz; ⁴J_{F,F} = 4.6 Hz.
¹H NMR: ppm (Acetonitril-D₃; Referenz: TMS): 0.98 t (CH₃); 1.38 t,q (CH₂); 1.73 m (CH₂); 2.17 m (2CH₂); 2.94 s (CH₃); 3.40 m (2CH₂); 3.22 t,t (CH₂); ³J_{H,H} = 7.4 Hz; ³J_{H,H} = 4.3 Hz; ²J_{H,H} = 4.1 Hz.

N-Methyl-N-butylpyrrolidinium (pentafluorethyl)pentafluorphosphat und die anderen Phosphate können nach bekannten Methoden aus der wässrigen ethanolischen Phase isoliert werden.

Analog zu diesem Beispiel werden folgende Gemische und auch isolierte Verbindungen hergestellt:
A) N-Methyl-N-ethylpyrrolidinium pentafluorethyltrifluorborat isoliert oder im Gemisch mit N-Methyl-N-ethylpyrrolidinium (pentafluorethyl)pentafluorphosphat und/oder N-Methyl-N-ethylpyrrolidinium bis(pentafluorethyl)tetrafluorphosphat und/oder N-Methyl-N-ethylpyrrolidinium hexafluorphosphat;
B) N-Methyl-N-i-propylpyrrolidinium pentafluorethyltrifluorborat isoliert oder im Gemisch mit N-Methyl-N-i-propylpyrrolidinium (pentafluorethyl)pentafluorphosphat und/oder N-Methyl-N-i-propylpyrrolidinium bis(pentafluorethyl)tetrafluorphosphat und/oder N-Methyl-N-i-propylpyrrolidinium hexafluorphosphat;
C) N-Methyl-N-propylpyrrolidinium pentafluorethyltrifluorborat isoliert oder im Gemisch mit N-Methyl-N-propylpyrrolidinium (pentafluorethyl)pentafluorphosphat und/oder N-Methyl-N-propylpyrrolidinium bis(pentafluorethyl)tetrafluorphosphat und/oder N-Methyl-N-propylpyrrolidinium hexafluorphosphat;
D) N-Methyl-N-pentylpyrrolidinium pentafluorethyltrifluorborat isoliert oder im Gemisch mit N-Methyl-N-pentylpyrrolidinium (pentafluorethyl)pentafluorphosphat und/oder N-Methyl-N-pentylpyrrolidinium bis(pentafluorethyl)tetrafluorphosphat und/oder N-Methyl-N-pentylpyrrolidinium hexafluorphosphat;
E) N-Methyl-N-hexylpyrrolidinium pentafluorethyltrifluorborat isoliert oder im Gemisch mit N-Methyl-N-hexylpyrrolidinium (pentafluorethyl)pentafluorphosphat und/oder N-Methyl-N-hexylpyrrolidinium bis(pentafluorethyl)tetrafluorphosphat und/oder N-Methyl-N-hexylpyrrolidinium hexafluorphosphat;
F) N-Methyl-N-heptylpyrrolidinium pentafluorethyltrifluorborat isoliert oder im Gemisch mit N-Methyl-N-hepty(pyrrolidinium (pentafluorethyl)pentafluorphosphat und/oder N-Methyl-N-heptylpyrrolidinium bis(pentafluorethyl)tetrafluorphosphat und/oder N-Methyl-N-heptylpyrrolidinium hexafluorphosphat;
G)N-Methyl-N-octylpyrrolidinium pentafluorethyltrifluorborat isoliert oder im Gemisch mit N-Methyl-N-octylpyrrolidinium (pentafluorethyl)pentafluorphosphat und/oder N-Methyl-N-octylpyrrolidinium bis(pentafluorethyl)tetrafluorphosphat und/oder N-Methyl-N-octylpyrrolidinium hexafluorphosphat;
H) N-Methyl-N-nonylpyrrolidinium pentafluorethyltrifluorborat isoliert oder im Gemisch mit N-Methyl-N-nonylpyrrolidinium (pentafluorethyl)pentafluorphosphat und/oder N-Methyl-N-nonylpyrrolidinium bis(pentafluorethyl)tetrafluorphosphat und/oder N-Methyl-N-nonylpyrrolidinium hexafluorphosphat;
I) N-Methyl-N-decylpyrrolidinium pentafluorethyltrifluorborat isoliert oder im Gemisch mit N-Methyl-N-decylpyrrolidinium (pentafluorethyl)pentafluorphosphat und/oder N-Methyl-N-decylpyrrolidinium bis(pentafluorethyl)tetrafluorphosphat und/oder N-Methyl-N-decylpyrrolidinium hexafluorphosphat;
J) N,N-Dimethyl-pyrrolidinium pentafluorethyltrifluorborat isoliert oder im Gemisch mit N,N-Dimethyl-pyrrolidinium (pentafluorethyl)pentafluorphosphat und/oder N,N-Dimethyl-pyrrolidinium bis(pentafluorethyl)tetrafluorphosphat und/oder N,N-Dimethyl-pyrrolidinium hexafluorphosphat;
K) N,N-Diethyl-pyrrolidinium pentafluorethyltrifluorborat isoliert oder im Gemisch mit N,N-Diethyl-pyrrolidinium (pentafluorethyl)pentafluorphosphat und/oder N,N-Diethyl-pyrrolidinium bis(pentafluorethyl)tetrafluorphosphat und/oder N,N-Diethyl-pyrrolidinium hexafluorphosphat;
L) N,N-Di(i-propyl)-pyrrolidinium pentafluorethyltrifluorborat isoliert oder im Gemisch mit N,N-Di(i-propyl)-pyrrolidinium (pentafluorethyl)pentafluorphosphat und/oder N,N-Di(i-propyl)-pyrrolidinium bis(pentafluorethyl)tetrafluorphosphat und/oder N,N-Di(i-propyl)-pyrrolidinium hexafluorphosphat;
M)N,N-Dipropyl-pyrrolidinium pentafluorethyltrifluorborat isoliert oder im Gemisch mit N,N-Dipropyl-pyrrolidinium (pentafluorethyl)pentafluorphosphat und/oder N,N-Dipropyl-pyrrolidinium bis(pentafluorethyl)tetrafluorphosphat und/oder N,N-Dipropyl-pyrrolidinium hexafluorphosphat;
N) N,N-Dibutyl-pyrrolidinium pentafluorethyltrifluorborat isoliert oder im Gemisch mit N,N-Dibutyl-pyrrolidinium (pentafluorethyl)pentafluorphosphat und/oder N,N-Dibutyl-pyrrolidinium bis(pentafluorethyl)tetrafluorphosphat und/oder N,N-Dibutyl-pyrrolidinium hexafluorphosphat;
O)N,N-Dipentyl-pyrrolidinium pentafluorethyltrifluorborat isoliert oder im Gemisch mit N,N-Dipentyl-pyrrolidinium (pentafluorethyl)pentafluorphosphat und/oder N,N-Dipentyl-pyrrolidinium bis(pentafluorethyl)tetrafluorphosphat und/oder N,N-Dipentyl-pyrrolidinium hexafluorphosphat;
P) N,N-Dihexyl-pyrrolidinium pentafluorethyltrifluorborat isoliert oder im Gemisch mit N,N-Dihexyl-pyrrolidinium (pentafluorethyl)pentafluorphosphat und/oder N,N-Dihexyl-pyrrolidinium bis(pentafluorethyl)tetrafluorphosphat und/oder N,N-Dihexyl-pyrrolidinium hexafluorphosphat;
Q)N,N-Diheptyl-pyrrolidinium pentafluorethyltrifluorborat isoliert oder im Gemisch mit N,N-Diheptyl-pyrrolidinium (pentafluorethyl)pentafluorphosphat und/oder N,N-Diheptyl-pyrrolidinium bis(pentafluorethyl)tetrafluorphosphat und/oder N,N-Diheptyl-pyrrolidinium hexafluorphosphat;
R)N,N-Dioctyl-pyrrolidinium pentafluorethyltrifluorborat isoliert oder im Gemisch mit N,N-Dioctyl-pyrrolidinium (pentafluorethyl)pentafluorphosphat und/oder N,N-Dioctyl-pyrrolidinium bis(pentafluorethyl)tetrafluorphosphat und/oder N,N-Dioctyl-pyrrolidinium hexafluorphosphat;
S) N,N-Dinonyl-pyrrolidinium pentafluorethyltrifluorborat isoliert oder im Gemisch mit N,N-Dinonyl-pyrrolidinium (pentafluorethyl)pentafluorphosphat und/oder N,N-Dinonyl-pyrrolidinium bis(pentafluorethyl)tetrafluorphosphat und/oder N,N-Dinonyl-pyrrolidinium hexafluorphosphat;
T) N,N-Didecyl-pyrrolidinium pentafluorethyltrifluorborat isoliert oder im Gemisch mit N,N-Didecyl-pyrrolidinium (pentafluorethyl)pentafluorphosphat und/oder N,N-Didecyl-pyrrolidinium bis(pentafluorethyl)tetrafluorphosphat und/oder N,N-Didecyl-pyrrolidinium hexafluorphosphat.

### Beispiel 4:

### Synthese von N-Butylpyridinium pentafluorethyltrifluorborat

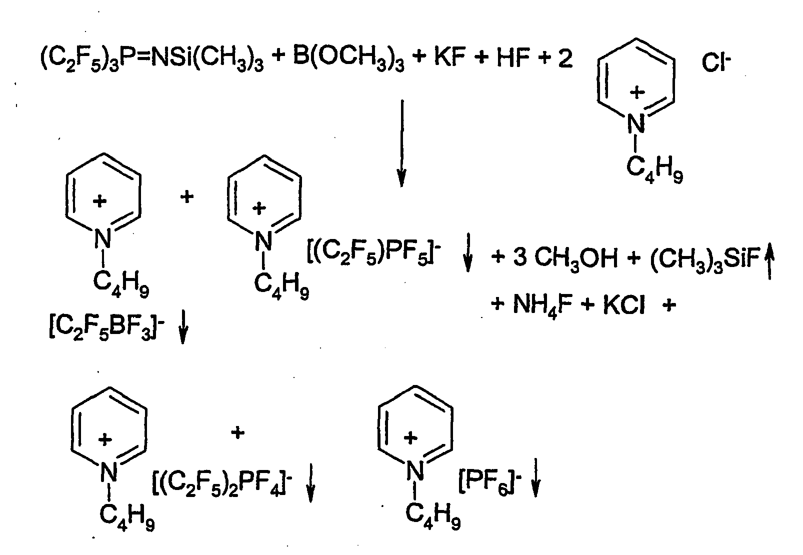

Analog zu Beispiel 2 werden 1,67 g (28,7 mmol) sprühgetrocknetes KF, 6,24 g (60,1 mmol) Borsäuremethylester, 15,0 g (31,6 mmol) N-Trimethylsilyltris(pentafluorethyl)phosphazen,15g (0,75 mol) HF und 11,3 g (65,8 mmol) N-Butylpyridiniumchlorid umgesetzt.
Die untere Phase mit der Mischung der Salze N-Butylpyridinium pentafluorethyltrifluorborat und N-Butylpyridinium (pentafluorethyl)pentafluorphosphat und/oder N-Butylpyridinium bis(pentafluorethyl)tetrafluorphosphat und/oder N-Butylpyridinium hexafluorphosphat wird von der wässrigen Phase getrennt und 10 Mal mit 70 ml Wasser gewaschen. Nach Abdestillieren des Wassers wird der ölige Rückstand wieder mit Wasser gewaschen und so die Phosphate abgetrennt.
Nach trocknem im Vakuum bei 7 Pa und 50°C erhält man 7,4 g N-Butylpyridinium pentafluorethyltrifluorborat, das entspricht einer Ausbeute von 79,8 %.

¹¹B NMR: ppm (Acetonitril-D₃; externe Referenz: BF₃ . OEt₂): -0.59 tq; J¹_{B,F} = 40.8 Hz; J²_{B,F} = 20.3 Hz.
¹⁹F NMR: ppm (Acetonitril-D₃; interne Referenz: CCl₃F): -83.22 q (CF₃) ; -135.99 q (CF₂); -152.93 q,q (BF₃); ¹J_{B,F} = 41 Hz; ²J_{B,F} = 19.6 Hz; ⁴J_{F,F} = 4.6 Hz.
¹H NMR: ppm (Acetonitril-D₃; Referenz: TMS): 0.97 t (CH₃); 1.39 t,q (CH₂); 1.96 m (CH₂); 4.53 t (CH₂); 8.03 d,d (2CH); 8.51 t,t (CH); 8.70 d (2CH); ³J_{H,H} = 7.4 Hz; ³J_{H,H} =7.6 Hz; ³J_{H,H} = 7.8 Hz; ³J_{H,H} = 6.9 Hz; ³J_{H,H} = 5.5 Hz; ⁴J_{H,H} = 1.3 Hz.

N-Butylpyridinium (pentafluorethyl)pentafluorphosphat und die anderen Phosphate können nach bekannten Methoden aus der wässrigen Phase isoliert werden.

Analog zu diesem Beispiel werden folgende Gemische und auch isolierte Verbindungen hergestellt:
A) N-Methylpyridinium pentafluorethyltrifluorborat isoliert oder im Gemisch mit N-Methylpyridinium (pentafluorethyl)pentafluorphosphat und/oder N-Methylpyridinium bis(pentafluorethyl)tetrafluorphosphat und/oder N-Methylpyridinium hexafluorphosphat;
B) N-Ethylpyridinium pentafluorethyltrifluorborat isolierst oder im Gemisch mit N-Ethylpyridinium (pentafluorethyl)pentafluorphosphat und/oder N-Ethylpyridinium bis(pentafluorethyl)tetrafluorphosphat und/oder N-Ethylpyridinium hexafluorphosphat;
C) N-(i-Propyl)pyridinium pentafluorethyltrifluorborat isoliert oder im Gemisch mit N-(i-Propyl)pyridinium (pentafluorethyl)pentafluorphosphat und/oder N-(i-Propyl)pyridinium bis(pentafluorethyl)tetrafluorphosphat und/oder N-(i-Propyl)pyridinium hexafluorphosphat;
D) N-Propylpyridinium pentafluorethyltrifluorborat isoliert oder im Gemisch mit N-Propylpyridinium (pentafluorethyl)pentafluorphosphat und/oder N-Propylpyridinium bis(pentafluorethyl)tetrafluorphosphat und/oder N-Propylpyridinium hexafluorphosphat;
E) N-Pentylpyridinium pentafluorethyltrifluorborat isoliert oder im Gemisch mit N-Pentylpyridinium (pentafluorethyl)pentafluorphosphat und/oder N-Pentylpyridinium bis(pentafluorethyl)tetrafluorphosphat und/oder N-Pentylpyridinium hexafluorphosphat;
F) N-Hexylpyridinium pentafluorethyltrifluorborat isoliert oder im Gemisch mit N-Hexylpyridinium (pentafluorethyl)pentafluorphosphat und/oder N-Hexylpyridinium bis(pentafluorethyl)tetrafluorphosphat und/oder N-Hexylpyridinium hexafluorphosphat;
G)N-Heptylpyridinium pentafluorethyltrifluorborat isoliert oder im Gemisch mit N-Heptylpyridinium (pentafluorethyl)pentafluorphosphat und/oder N-Heptylpyridinium bis(pentafluorethyl)tetrafluorphosphat und/oder N-Heptylpyridinium hexafluorphosphat;
H)N-Octylpyridinium pentafluorethyltrifluorborat isoliert oder im Gemisch mit N-Octylpyridinium (pentafluorethyl)pentafluorphosphat und/oder N-Octylpyridinium bis(pentafluorethyl)tetrafluorphosphat und/oder N-Octylpyridinium hexafluorphosphat;
I) N-Nonylpyridinium pentafluorethyltrifluorborat isoliert oder im Gemisch mit N-Nonylpyridinium (ppntafluorethyl)pentafluorphosphat und/oder N-Nonylpyridinium bis(pentafluorethyl)tetrafluorphosphat und/oder N-Nonylpyridinium hexafluorphosphat;
J) N-Decylpyridinium pentafluorethyltrifluorborat isoliert oder im Gemisch mit N-Decylpyridinium (pentafluorethyl)pentafluorphosphat und/oder N-Decylpyridinium bis(pentafluorethyl)tetrafluorphosphat und/oder N-Decylpyridinium hexafluorphosphat;
K) N-Methyl-4-methylpyridinium pentafluorethyltrifluorborat isoliert oder im Gemisch mit N-Methyl-4-methylpyridinium (pentafluorethyl)pentafluorphosphat und/oder N-Methyl-4-methylpyridinium bis(pentafluorethyl)tetrafluorphosphat und/oder N-Methyl-4-methylpyridinium hexafluorphosphat;
L) N-Ethyl-4-methylpyridinium pentafluorethyltrifluorborat isoliert oder im Gemisch mit N-Ethyl-4-methylpyridinium (pentafluorethyl)pentafluorphosphat und/oder N-Ethyl-4-methylpyridinium bis(pentafluorethyl)tetrafluorphosphat und/oder N-Ethyl-4-methylpyridinium hexafluorphosphat;
M)N-(i-Propyl)-4-methylpyridinium pentafluorethyltrifluorborat isoliert oder im Gemisch mit N-(i-Propyl)-4-methylpyridinium (pentafluorethyl)pentafluorphosphat und/oder N-(i-Propyl)-4-methylpyridinium bis(pentafluorethyl)etrafluorphosphat und/oder N-(i-Propyl)-4-methylpyridinium hexafluorphosphat;
N) N-Propyl-4-methylpyridinium pentafluorethyltrifluorborat isoliert oder im Gemisch mit N-Propyl-4-methylpyridinium (pentafluorethyl)pentafluorphosphat und/oder N-Propyl-4-methylpyridinium bis(pentafluorethyl)tetrafluorphosphat und/oder N-Propyl-4-methylpyridinium hexafluorphosphat;
O)N-Butyl-4-methylpyridinium pentafluorethyltrifluorborat isoliert oder im Gemisch mit N-Butyl-4.-methylpyridinium (pentafluorethyl)pentafluorphosphat und/oder N-Butyl-4-methylpyridinium bis(pentafluorethyl)tetrafluorphosphat und/oder N-Butyl-4-methylpyridinium hexafluorphosphat;
P) N-Pentyl-4-methylpyridinium pentafluorethyltrifluorborat isoliert oder im Gemisch mit N-Pentyl-4-methylpyridinium (pentafluorethyl)pentafluorphosphat und/oder N-Pentyl-4-methylpyridinium bis(pentafluorethyl)tetrafluorphosphat und/oder N-Pentyl-4-methylpyridinium hexafluorphosphat;
Q)N-Hexyl-4-methylpyridinium pentafluorethyltrifluorborat isoliert oder im Gemisch mit N-Hexyl-4-methylpyridinium (pentafluorethyl)pentafluorphosphat und/oder N-Hexyl-4-methylpyridinium bis(pentafluorethyl)tetrafluorphosphat und/oder N-Hexyl-4-methylpyridinium hexafluorphosphat;
R) N-Heptyl-4-methylpyridinium pentafluorethyltrifluorborat isoliert oder im Gemisch mit N-Heptyl-4.-methylpyridinium (pentafluorethyl)pentafluorphosphat und/oder N-Heptyl-4-methylpyridinium bis(pentafluorethyl)tetrafluorphosphat und/oder N-Heptyl-4-methylpyridinium hexafluorphosphat;
S) N-Octyl-4-methylpyridinium pentafluorethyltrifluorborat isoliert oder im Gemisch mit N-Octyl-4-methylpyridinium (pentafluorethyl)pentafluorphosphat und/oder N-Octyl-4-methylpyridinium bis(pentafluorethyl)tetrafluorphosphat und/oder N-Octyl-4-methylpyridinium hexafluorphosphat;
T) N-Nonyl-4-methylpyridinium pentafluorethyltrifluorborat isoliert oder im Gemisch mit N-Nonyl-4-methylpyridinium (pentafluorethyl)pentafluorphosphat und/oder N-Nonyl-4-methylpyridinium bis(pentafluorethyl)tetrafluorphosphat und/oder N-Nonyl-4-methylpyridinium hexafluorphosphat;
U) N-Decyl-4-methylpyridinium pentafluorethyltrifluorborat isoliert oder im Gemisch mit N-Decyl-4-methylpyridinium (pentafluorethyl)pentafluorphosphat und/oder N-Decyl-4-methylpyridinium bis(pentafluorethyl)tetrafluorphosphat und/oder N-Decyl-4-methylpyridinium hexafluorphosphat;
V) N-Methyl-3-methylpyridinium pentafluorethyltrifluorborat isoliert oder im Gemisch mit N-Methyl-3-methylpyridinium (pentafluorethyl)pentafluorphosphat und/oder N-Methyl-3-methylpyridinium bis(pentafluorethyl)tetrafluorphosphat und/oder N-Methyl-3-methylpyridinium hexafluorphosphat;
W) N-Ethyl-3-methylpyridinium pentafluorethyltrifluorborat isoliert oder im Gemisch mit N-Ethyl-3-methylpyridinium (pentafluorethyl)pentafluorphosphat und/oder N-Ethyl-3-methylpyridinium bis(pentafluorethyl)tetrafluorphosphat und/oder N-Ethyl-3-methylpyridinium hexafluorphosphat;
X) N-(i-Propyl)-3-methylpyridinium pentafluorethyltrifluorborat isoliert oder im Gemisch mit N-(1-Propyl)-3-methylpyridinium (pentafluorethyl)pentafluorphosphat und/oder N-(i-Propyl)-3-methylpyridinium bis(pentafluorethyl)tetrafluorphosphat und/oder N-(i-Propyl)-3-methylpyridinium hexafluorphosphat;
Y) N-Propyl-3-methylpyridinium pentafluorethyltrifluorborat isoliert oder im Gemisch mit N-Propyl-3-methylpyridinium (pentafluorethyl)pentafluorphosphat und/oder N-Propyl-3-methylpyridinium bis(pentafluorethyl)tetrafluorphosphat und/oder N-Propyl-3-methylpyridinium hexafluorphosphat;
Z) N-Butyl-3-methylpyridinium pentafluorethyltrifluorborat isoliert oder im. Gemisch mit N-Butyl-3-methylpyridinium (pentafluorethyl)pentafluorphosphat und/oder N-Butyl-3-methylpyridinium bis(pentafluorethyl)tetrafluorphosphat und/oder N-Butyl-3-methylpyridinium hexafluorphosphat;

A1) N-Pentyl-3-methylpyridinium pentafluorethyltrifluorborat isoliert oder im Gemisch mit N-Pentyl-3-methylpyridinium (pentafluorethyl)pentafluorphosphat und/oder N-Pentyl-3-methylpyridinium bis(pentafluorethyl)tetrafluorphosphat und/oder N-Pentyl-3-methylpyridinium hexafluorphosphat;
B1) N-Hexyl-3-methylpyridinium pentafluorethyltrifluorborat isoliert oder im Gemisch mit N-Hexyl-3-methylpyridinium (pentafluorethyl)pentafluorphosphat und/oder N-Hexyl-3-methylpyridinium bis(pentafluorethyl)tetrafluorphosphat und/oder N-Hexyl-3-methylpyridinium hexafluorphosphat;
C1) N-Heptyl-3-methylpyridinium pentafluorethyltrifluorborat isoliert oder im Gemisch mit N-Heptyl-3-methylpyridinium (pentafluorethyl)pentafluorphosphat und/oder N-Heptyl-3-methylpyridinium bis(pentafluorethyl)etrafluorphosphat und/oder N-Heptyl-3-methylpyridinium hexafluorphosphat;
D1) N-Octyl-3-methylpyridinium pentafluorethyltrifluorborat isoliert oder im Gemisch mit N-Octyl-3-methylpyridinium (pentafluorethyl)pentafluorphosphat und/oder N-Octyl-3-methylpyridinium bis(pentafluorethyl)tetrafluorphosphat und/oder N-Octyl-3-methylpyridinium hexafluorphosphat;
E1) N-Nonyl-3-methylpyridinium pentafluorethyltrifluorborat isoliert oder im Gemisch mit N-Nonyl-3-methylpyridinium (pentafluorethyl)pentafluorphosphat und/oder N-Nonyl-3-methylpyridinium bis(pentafluorethyl)tetrafluorphosphat und/oder N-Nonyl-3-methylpyridinium hexafluorphosphat;
F1) N-Decyl-3-methylpyridinium pentafluorethyltrifluorborat isoliert oder im Gemisch mit N-Decyl-3-methylpyridinium (pentafluorethyl)pentafluorphosphat und/oder N-Decyl-3-methylpyridinium bis(pentafluorethyl)tetrafluorphosphat und/oder N-Decyl-3-methylpyridinium hexafluorphosphat.

### Beispiel 5: Viskositätsdaten

In der folgenden Tabelle 1 sind Viskositätsdaten aufgeführt. Die Viskosität wurde mit einem Viskosimeter SVM3000 der Firma Anton Paar, Östereich ermittelt, wobei die Standardprozedur durchgeführt wurde, wie sie in dem Begleitmaterial zum Viskosimeter beschrieben wird.

**Tabelle 1: Viskositätsdaten**

| Verbindung | Viskosität, cP (mPa·s) | | | |
|---|---|---|---|---|
| | 20°C | 40°C | 60°C | 80°C |
| 1-Butyl-3-methyl-imidazolium (pentafluorethyl)trifluorborat | 70 | 32 | 18 | 11 |
| 1-Butylpyridinium (pentafluorethyl)trifluorborat | 86 | 37 | 19 | 11 |

### Beispiel 6: Cyclovoltamogramm, Fig. 1

Die Messung der elektrochemischen Stabilität von N-Butyl-N-methylpyrrolidinium (pentafluorethyl)trifluorborat wurde mit einem Potentiostat Autolab TGSTAT 30 von ECO-Chemie durchgeführt
Arbeitselektrode: Glassy Carbon
Gegenetektrode: Platin disk
Referenzelektrode: Ag/Ag⁺
Scan rate: 20 mV/S

N-Butyl-N-methylpyrrolidinium (pentafluorethyl)trifluorborat wird 0.5 molar in Acetonitril gelöst und die Lösung in einer Glove-Box unter Argon bei Raumtemperatur vermessen.

Das Cyclovoltamogramm der Figur 1 zeigt, dass die Verbindung eine hohe elektrochemische Stabilität im Bereich von -3 bis +4 V besitzt (Null ist für E° von Ferrocen referenziert).

### Beispiel 7: Thermische Stabilität

In der folgenden Tabelle 2 sind Angaben aufgelistet, mit welcher Rate eine Zersetzung der Perfluoralkylborat-Verbindung in Tetrafluorborat-Verbindungen erfolgt. Diese Daten zeigen eindeutig, dass Trifluormethyltrifluorborat-Salze nicht thermisch stabil sind.

Die Zersetzungsrate wurde ermittelt, indem die Proben auf 150°C erhitzt wurden und ¹⁹F NMR-spektroskopisch vermessen wurden.

**Tabelle 2: Zersetzungsrate**

| Verbindung | Zersetzungsrate zu [BF₄]⁻ | |
|---|---|---|
| | 150°C,1 1 Stunde | 150°C, 5 Stunden |
| 1-Butyl-3-methyl-imidazolium (pentafluorethyl)trifluorborat | 0 | 0 |
| 1-Butyl-3-methyl-imidazolium (trifluormethyl)trifluorborat | ca. 1 mol% | 60 mol% |

### Beispiel 8:

Synthese von 2,2,3,3,3-Pentafluor-1-phenylpropan-1-ol

(C₂F₅)₃P=NSi(CH₃)₃ + (CH₃)₄NF + C₆H₅C(O)H → C₆H₅CH(OH)C₂F₅

1,59 g (16.1 mmol) Tetramethylammoniumfluorid und 8,54 g (80,5 mmol) Benzaldehyd werden in 20 ml trockenem 1,2-Dimethoxyethan gelöst. Zu dieser Lösung werden bei -30°C Badtemperatur unter Schutzgas 8,4 g (17,7 mmol) N-Trimethylsilyltris(pentafluorethyl)phosphazen zugetropft. Die Reaktionsmischung wird langsam auf Raumtemperatur erwärmt und das Lösungsmittel abdestilliert. Der Rückstand wird mit einer wässrigen NaOH-Lösung verdünnt (4,1 g NaOH in 40 ml Wasser) und die wässrige Phase zwei Mal mit 40 ml Diethylether extrahiert. Der Extrakt wird mit einer 0,1 M Salzsäure und Wasser gewaschen und über MgSO₄ getrocknet. Das Lösungsmittel Diethylether wird abdestilliert und der Rückstand fraktioniert destilliert, wobei die Fraktion bei 110-115°C der Verbindung 2,2,3,3,3-Pentafluor-1-phenylpropan-1-ol entspricht (2,3 g). Die Ausbeute liegt bei 63,2 %.
¹⁹F NMR: ppm (Acetonitril-D₃; Referenz: CCl₃F): -80.63 s (CF₃); -119.19 d,d (ABX-System, CF_{A}); -129.19 d,d (ABX-System, CF_{B}); J_{A,B} = 274 Hz; ³J_{H,F(A)} = 6.5 Hz; ³J_{H,F(B)} =19.1 Hz.
¹H NMR: ppm (Acetonitril-D₃; Referenz: TMS): 4.61 br. s (OH), 5.26 d,d (CH), 7.41 - 7.56 (C₆H₅).

Die NMR-Daten und der Siedepunkt entsprechen den Daten aus der Literatur.

### Beispiel 9:

### Synthese von 2,2,3,3,3-Pentafluor-1,1-diphenylpropan-1-ol

2,23 g (23,9 mmol) Tetramethylammoniumfluorid und 8,41 g (46,2 mmol) Benzophenon werden in 20 ml trockenem 1,2-Dimethoxyethan gelöst. Zu dieser Lösung werden bei -30°C Badtemperatur unter Schutzgas 12,32 g (25,9 mmol) N-Trimethylsilyltris(pentafluorethyl)phosphazen zugetropft. Die Reaktionsmischung wird langsam auf Raumtemperatur erwärmt und der Niederschlag unter Schutzgas abfiltriert. Nach mehrmaligem Waschen mit Diethylether wird er im Vakuum getrocknet. Der Rückstand wird weiterhin mit 20 ml einer 20 %igen Salzsäure behandelt und die wässrige Phase mit

Diethylether extrahiert. Die organische Phase wird mit einer 0,1 M wässrigen Natriumhydrogencarbonat-Lösung gewaschen und über MgSO₄ getrocknet. Das Lösungsmittel Diethylether wird abdestilliert. Man erhält 5,7 g 2,2,3,3,3-Pentafluor-1,1-diphenylpropan-1-ol entspricht, das entspricht einer Ausbeute von 78,9 %.
Schmelzpunkt: 82-83°C.

¹⁹F NMR: ppm (Acetonitril-D₃; Referenz: CCl₃F): -76.32 t (CF₃) ; -114.71 q (CF₂); ³J_{F,F} = 0.9 Hz.
¹H NMR: ppm (Acetonitril-D₃; Referenz: TMS): 5.03 br. s (OH), 7.31 - 7.42 (6H, C₆H₅), 7.58 - 7.63 (4H, C₆H₅).

## Patentansprüche

1. Verfahren zur Herstellung von Verbindungen der Formel 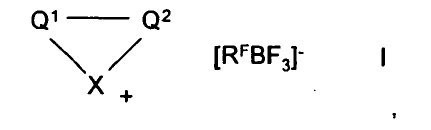 worin
X NR¹ oder N(R¹)₂,
-Q¹-Q²- -CHR³-CHR⁴-CHR⁵-CHR⁶, -CR²=CR³-CR⁴=CR⁵-CR⁶= oder -CR⁷=CR⁸-NR¹⁰-CR⁹=,
R¹ jeweils unabhängig voneinander Alkyl mit 1-10 C-Atomen oder -(CH₂)-R¹¹,
R²-R⁶ Wasserstoff oder Alkyl mit 1-10 C-Atomen,
R⁷-R⁹ Wasserstoff, Alkyl mit 1-10 C-Atomen oder Aryl,
R¹⁰ Alkyl mit 2-8 C-Atomen oder -(CH₂)-R¹¹,
R¹¹ perfluoriertes oder teilweise fluoriertes Alkyl mit 1-8 C- Atomen,
R^{F} perfluoriertes Alkyl mit 2-8 C-Atomen und
Aryl Phenyl, perfluoriertes Phenyl oder durch Alkyl mit 1-8 C- Atomen substituiertes Phenyl oder perfluoriertes Phenyl
bedeutet, **dadurch gekennzeichnet, dass**
in der ersten Stufe eine Verbindung der Formel II
(R^{F})₃P=NSi(R¹²)₃ II
worin
R^{F} jeweils unabhängig voneinander perfluoriertes Alky mit 2-8 C-Atomen und
R¹² jeweils unabhängig voneinander Alkyl mit 1-8 C-Atomen, Alkoxy mit 1-8 C-Atomen, Cycloalkyl mit 3-7 C-Atomten, Halogen oder Aryl bedeutet,
mit einem Fluorid der Formel III
MF III
worin
M Ammonium, Alkali- oder Erdalkalimetall oder ein Metall der Gruppe 11 oder 12 ist
und einem Borsäureester der Formel IV
B(OR¹³)₃ IV,
worin
R¹³ jeweils unabhängig voneinander Alkyl mit 1-8 C-Atomen oder Aryl bedeutet,
umgesetzt werden und das resultierende Salz der Formel V
M[R^{F}B(OR¹³)₃] V,
worin M, R^{F} und R¹³ eine der zuvor genannten Bedeutungen hat,
in der zweiten Stufe mit HF umgesetzt wird
und das resultierende Salz der Formel VI,
M[R^{F}BF₃] VI,
worin R^{F} eine zuvor genannte Bedeutung hat,
in der dritten Stufe mit einer Verbindung der Formel VII 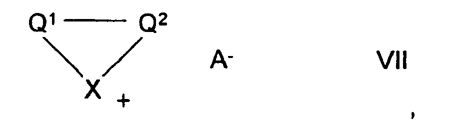 worin X und -Q¹-Q²- eine bei Formel I angegebene Bedeutung hat und A⁻ Alkylsulfat, Alkylsulfonat, Trifluormethansulfonat, Tetrafluorborat, Acetat, Trifluoracetat, Bis(perfluoralkyl)phosphinat, F⁻, HF₂⁻, Cl⁻, Br⁻ oder I⁻ bedeutet,
umgesetzt wird.

2. Verbindungen der Formel I 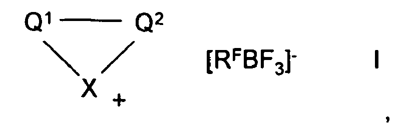 worin
X N(R¹)₂,
-Q¹-Q²- -CHR³-CHR⁴-CHR⁵-CHR⁶,
R¹ jeweils unabhängig voneinander Alkyl mit 1-10 C-Atomen oder -(CH₂)-R¹¹,
R²-R⁶ Wasserstoff oder Alkyl mit 1-10 C-Atomen,
R¹¹ perfluoriertes oder teilweise fluoriertes Alkyl mit 1-8 C-Atomen
und
R^{F} perfluoriertes Alkyl mit 2-8 C-Atomen
bedeutet.

3. Verbindungen nach Anspruch 2, **dadurch gekennzeichnet, dass** die Substituenten R¹ verschieden sind.

4. Verbindungen nach Anspruch 2 oder 3, **dadurch gekennzeichnet, dass** R^{F} Perfluorethyl, Perfluorpropyl oder Perfluorbutyl bedeutet.

5. Verbindungen nach Anspruch 2:
N-Methyl-N-butylpyrrolidinium pentafluorethyltrifluorborat,
N-Methyl-N-hexylpyrrolidinium pentafluorethyltrifluorborat,
N-Methyl-N-octylpyrrolidinium pentafluorethyltrifluorborat.

6. Verbindungen der Formel II
(R^{F})₃P=NSi(R¹²)₃ II,
worin
R^{F} jeweils unabhängig voneinander perfluoriertes Alky mit 1-8 C-Atomen und
R¹² jeweils unabhängig voneinander Alkyl mit 1-8 C-Atomen, Alkoxy mit 1-8 C-Atomen, Cycloalkyl mit 3-7 C-Atomten, Halogen oder Aryl bedeutet.

7. Verbindungen nach Anspruch 6, **dadurch gekennzeichnet, dass** R^{F} perfluoriertes C₁-C₄-Alkyl bedeutet.

8. Verbindungen nach Anspruch 6 oder 7, **dadurch gekennzeichnet, dass** alle drei Substituenten R^{F} gleich sind.

9. Verbindungen nach einem oder mehreren der Ansprüche 6 bis 8, **dadurch gekennzeichnet, dass** R¹² jeweils unabhängig voneinander Alkyl mit 1-8 C-Atomen bedeutet.

## Claims

1. Process for the preparation of compounds of the formula I 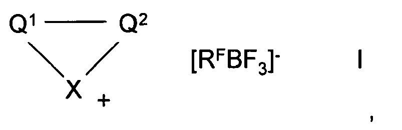 in which
X denotes NR¹ or N(R¹)₂,
-Q¹-Q²- denotes -CHR³-CHR⁴-CHR⁵-CHR⁶, -CR²=CR³-CR⁴=CR⁵-CR⁶= or -CR⁷=CR⁸-NR¹⁰-CR⁹=,
R¹ in each case, independently of one another, denotes alkyl having 1-10 C atoms or -(CH₂)-R¹¹,
R²-R⁶ denote hydrogen or alkyl having 1-10 C atoms,
R⁷-R⁹ denote hydrogen, alkyl having 1-10 C atoms or aryl,
R¹⁰ denotes alkyl having 2-8 C atoms or -(CH₂)-R¹¹,
R¹¹ denotes perfluorinated or partially fluorinated alkyl having 1-8 C atoms,
R^{F} denotes perfluorinated alkyl having 2-8 C atoms, and
aryl denotes phenyl, perfluorinated phenyl, or phenyl or perfluori- nated phenyl which is substituted by alkyl having 1-8 C atoms,
**characterised in that**,
in the first step, a compound of the formula II
(R^{F})₃P=NSi(R¹²)₃ II,
in which
R^{F} in each case, independently of one another, denotes perfluorinated alkyl having 2-8 C atoms, and
R¹² in each case, independently of one another, denotes alkyl having 1-8 C atoms, alkoxy having 1-8 C atoms, cycloalkyl having 3-7 C atoms, halogen or aryl,
is reacted with a fluoride of the formula III
MF III
in which
M is ammonium, alkali metal or alkaline-earth metal or a metal from group 11 or 12,
and a boric acid ester of the formula IV
B(OR¹³)₃ IV,
in which
R¹³ in each case, independently of one another, denotes alkyl having 1-8 C atoms or aryl,
and the resultant salt of the formula V
M[R^{F}B(OR¹³)₃] V,
in which M, R^{F} and R¹³ have one of the above-mentioned meanings,
is reacted, in the second step, with HF,
and the resultant salt of the formula VI
M[R^{F}BF₃] VI,
in which R^{F} has a meaning indicated above,
is reacted, in the third step, with a compound of the formula VII 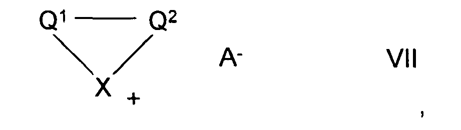 in which X and -Q¹-Q²- have a meaning indicated for the formula I, and A⁻ denotes alkylsulfate, alkylsulfonate, trifluoromethanesulfonate, tetrafluoroborate, acetate, trifluoroacetate, bis(perfluoroalkyl)phosphinate, F⁻, HF₂⁻, Cl⁻, Br⁻ or I⁻.

2. Compounds of the formula I 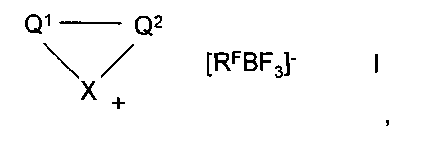 in which
X denotes N(R¹)₂,
-Q¹-Q²- denotes -CHR³-CHR⁴-CHR⁵-CHR⁶,
R¹ in each case, independently of one another, denotes alkyl having 1-10 C atoms or -(CH₂)-R¹¹,
R²-R⁶ denote hydrogen or alkyl having 1-10 C atoms,
R¹¹ denotes perfluorinated or partially fluorinated alkyl having 1-8 C atoms,
and
R^{F} denotes perfluorinated alkyl having 2-8 C atoms.

3. Compounds according to Claim 2, **characterised in that** the substituents R¹ are different.

4. Compounds according to Claim 2 or 3, **characterised in that** R^{F} denotes perfluoroethyl, perfluoropropyl or perfluorobutyl.

5. Compounds according to Claim 2:
N-methyl-N-butylpyrrolidinium pentafluoroethyltrifluoroborate,
N-methyl-N-hexylpyrrolidinium pentafluoroethyltrifluoroborate,
N-methyl-N-octylpyrrolidinium pentafluoroethyltrifluoroborate.

6. Compounds of the formula II
(R^{F})₃P=NSi(R¹²)₃ II,
in which
R^{F} in each case, independently of one another, denotes perfluorinated alkyl having 1-8 C atoms, and
R¹² in each case, independently of one another, denotes alkyl having 1-8 C atoms, alkoxy having 1-8 C atoms, cycloalkyl having 3-7 C atoms, halogen or aryl.

7. Compounds according to Claim 6, **characterised in that** R^{F} denotes perfluorinated C₁-C₄-alkyl.

8. Compounds according to Claim 6 or 7, **characterised in that** all three substituents R^{F} are identical.

9. Compounds according to one or more of Claims 6 to 8, **characterised in that** R¹² in each case, independently of one another, denotes alkyl having 1-8 C atoms.

## Revendications

1. Procédé de préparation de composés de formule I 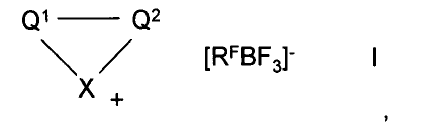 dans laquelle
X désigne NR¹ ou N(R¹)₂,
-Q¹-Q²- désigne -CHR³-CHR⁴-CHR⁵-CHR⁶, -CR²=CR³-CR⁴=CR⁵-CR⁶= ou -CR⁷=CR⁸-NR¹⁰-CR⁹=,
R¹ désigne dans chaque cas, indépendamment l'un de l'autre, alkyle ayant 1-10 atomes de C ou -(CH₂)-R¹¹,
R²-R⁶ désignent hydrogène ou alkyle ayant 1-10 atomes de C,
R⁷-R⁹ désignent hydrogène, alkyle ayant 1-10 atomes de C ou aryle,
R¹⁰ désigne alkyle ayant 2-8 atomes de C ou -(CH₂)-R¹¹,
R¹¹ désigne alkyle perfluoré ou partiellement fluoré ayant 1-8 atomes de C,
R^{F} désigne alkyle perfluoré ayant 2-8 atomes de C, et
aryle désigne phényle, phényle perfluoré, ou phényle ou phényle perfluoré qui est substitué par alkyle ayant 1-8 atomes de C,
**caractérisé en ce que**,
dans la première étape, un composé de formule II
(R^{F})₃P=NSi(R¹²)₃ II,
dans laquelle
R^{F} désigne dans chaque cas, indépendamment l'un de l'autre, alkyle perfluoré ayant 2-8 atomes de C, et
R¹² désigne dans chaque cas, indépendamment l'un de l'autre, alkyle ayant 1-8 atomes de C, alcoxy ayant 1-8 atomes de C, cycloalkyle ayant 3-7 atomes de C, halogène ou aryle,
est réagi avec un fluorure de formule III
MF III
dans laquelle
M est ammonium, un métal alcalin ou un métal alcalino-terreux ou un métal issu du groupe 11 ou 12,
et un ester de l'acide borique de formule IV
B(OR¹³)₃ IV,
dans laquelle
R¹³ désigne dans chaque cas, indépendamment l'un de l'autre, alkyle ayant 1-8 atomes de C ou aryle,
et le sel résultant de formule V
M[R^{F}B(OR¹³)₃] V,
dans laquelle M, R^{F} et R¹³ revêtent l'une des significations susmentionnées,
est réagi, dans la deuxième étape, avec HF,
et le sel résultant de formule VI
M[R^{F}BF₃] VI,
dans laquelle R^{F} revêt la signification indiquée ci-dessus,
est réagi, dans la troisième étape, avec un composé de formule VII 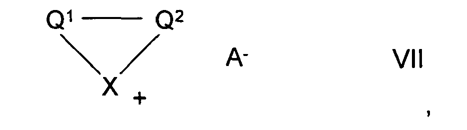 dans laquelle X et -Q¹⁻Q²- revêtent la signification indiquée pour la formule I, et
A⁻ désigne alkylsulfate, alkylsulfonate, trifluorométhanesulfonate, tétra-fluoroborate, acétate, trifluoroacétate, bis(perfluoroalkyl)phosphinate, F⁻, HF₂⁻, Cl⁻, Br⁻ ou I⁻.

2. Composés de formule I 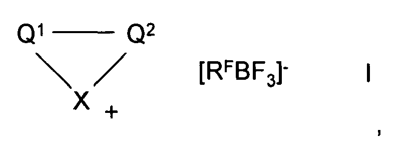 dans laquelle
X désigne N(R¹)₂,
-Q¹-Q²- désigne -CHR³-CHR⁴-CHR⁵-CHR⁶,
R¹ désigne dans chaque cas, indépendamment l'un de l'autre, alkyle ayant 1-10 atomes de C ou -(CH₂)-R¹¹,
R²-R⁶ désignent hydrogène ou alkyle ayant 1-10 atomes de C,
R¹¹ désigne alkyle perfluoré ou partiellement fluoré ayant 1-8 atomes de C,
et
R^{F} désigne alkyle perfluoré ayant 2-8 atomes de C.

3. Composés selon la revendication 2, **caractérisés en ce que** les substituants R¹ sont différents.

4. Composés selon la revendication 2 ou 3, **caractérisés en ce que** R^{F} désigne perfluoroéthyle, perfluoropropyle ou perfluorobutyle.

5. Composés selon la revendication 2:
le pentafluoroéthyltrifluoroborate de N-méthyl-N-butylpyrrolidinium,
le pentafluoroéthyltrifluoroborate de N-méthyl-N-hexylpyrrolidinium,
le pentafluoroéthyltrifluoroborate de N-méthyl-N-octylpyrrolidinium.

6. Composés de formule II
(R^{F})₃P=NSi(R¹²)₃ II,
dans laquelle
R^{F} désigne dans chaque cas, indépendamment l'un de l'autre, alkyle perfluoré ayant 1-8 atomes de C, et
R¹² désigne dans chaque cas, indépendamment l'un de l'autre, alkyle ayant 1-8 atomes de C, alcoxy ayant 1-8 atomes de C, cycloalkyle ayant 3-7 atomes de C, halogène ou aryle.

7. Composés selon la revendication 6, **caractérisés en ce que** R^{F} désigne C₁-C₄-alkyle perfluoré.

8. Composés selon la revendication 6 ou 7, **caractérisés en ce que** les trois substituants R^{F} sont identiques.

9. Composés selon l'une ou plusieurs des revendications 6 à 8, **caractérisés en ce que** R¹² désigne dans chaque cas, indépendamment l'un de l'autre, alkyle ayant 1-8 atomes de C.
